# EUROPEAN PATENT APPLICATION

(11) **EP 4 395 224 A1**
(43) Date of publication of application: **03.07.2024**
(21) Application number: 22861318.8
(22) Date of filing: 22.08.2022
(51) Int. Cl.: H04L 7/00

(54) **COMMUNICATION DEVICE AND COMMUNICATION SYSTEM**

(30) Priority: 27.08.2021 US 202163237675 P; 02.08.2022 US 202217879243
(71) Applicant: Sony Semiconductor Solutions Corporation, Atsugi-shi, Kanagawa 243-0014 (JP)
(72) Inventor: HYAKUDAI Toshihisa, Paramus. New Jersey 07652 (US); YAMADA Junya, Atsugi-shi, Kanagawa 243-0014 (JP); OTA Satoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/031576
(87) International publication number: WO 2023/027030

(57) **Abstract**

[Problem] To provide a communication device and a communication system that performs serial communication with low power consumption and high speed.

[Means of Solution] A communication device includes: a state switching control unit that controls switching between a first state in which synchronization is established for communication with a communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device; a first communication control unit that repeats in a first cycle an operation of continuously transmitting to the communication partner device a first signal during a first signal section in the fourth state; and a second communication control unit that, when receiving a second signal output from the communication partner device in response to the first signal, transmits a third signal synchronized with the second signal to the communication partner device. When the second communication control unit transmits the third signal, the state switching control unit causes the communication device to transition from the fourth state to the first state.

## Description

### [Technical Field]

The present disclosure relates to a communication device and a communication system.

### [Background Art]

A technology for performing high-speed serial communication between a plurality of devices has been proposed (PTL 1). This type of high-speed serial communication is used in various fields, for example, for communication between in-vehicle devices.

### [Citation List]

### [Patent Literature]

[PTL 1]
JP 2011-239011A

### [Summary]

### [Technical Problem]

With advances in autonomous driving technology and electronic technology, there is an increasing need for high-speed communication between in-vehicle devices. The Automotive SerDes Alliance (ASA) is for time division duplexing (TDD) communication between a root device and a leaf device (which are connected by a cable.

The root device and the leaf device do not always communicate with each other, and therefore when they do not communicate for a predetermined period of time or more, the states of the root device and the leaf device are changed to reduce power consumption.

The ASA standard ver. 1.01 defines a light sleep state and a deep sleep state. The light sleep state is a state in which communication is suspended at a time interval which is in a range of a TDD switching time to a time that allows the synchronization between the devices to be maintained, and the communication can be quickly resumed because the synchronization between the devices is maintained even during the suspension of communication. On the other hand, the deep sleep state is a state in which communication is stopped for a long period of time, and when the communication is resumed, synchronization is required to be re-established between the devices.

The root device has an ECU inside, which can transition from the deep sleep state to a normal state by itself. On the other hand, the leaf device does not have an ECU inside and requires a mechanism to transition from the deep sleep state to a normal state. The ASA standard ver. 1.01 does not specify the procedure for processing the leaf device to transition from the deep sleep state to the normal state, and the leaf device may not be able to quickly transition from the deep sleep state to the normal state.

Therefore, the present disclosure provides a communication device and a communication system that can perform serial communication with low power consumption and high speed.

### [Solution to Problem]

In order to solve the above problems, according to the present disclosure, a communication device is provided, including:
a state switching control unit that controls switching between a first state in which synchronization is established for communication with a communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device;
a first communication control unit that repeats in a first cycle an operation of continuously transmitting to the communication partner device a first signal during a first signal section in the fourth state; and
a second communication control unit that, when receiving a second signal output from the communication partner device in response to the first signal, transmits a third signal synchronized with the second signal to the communication partner device,
wherein when the second communication control unit transmits the third signal, the state switching control unit causes transition from the fourth state to the first state.

According to the present disclosure, a communication device is provided, including:
a first state switching control unit that controls switching between a first state in which synchronization is established for communication with a first communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the first communication partner device;
a second state switching control unit that controls switching between the first state, the second state, the third state, or the fourth state with a second communication partner device;
a first communication control unit that, when repeatedly receiving in a first cycle a first signal continuously transmitted during a first signal section from the second communication partner device with the second communication partner device being in the fourth state, transmits the received first signal to the first communication partner device; and
a second communication control unit that, when receiving a second signal responsive to the first signal from the first communication partner device, transmits the second signal to the second communication partner device,
wherein when the first communication partner device transmits the second signal, the first state switching control unit causes transition from the fourth state to the first state.

When the first signal is received from the second communication partner device in the fourth state and when the first communication partner device is in the first state, the second state, or the third state, the second state switching control unit may cause transition to the first state.

The first communication control unit may repeat in the first cycle an operation of continuously transmitting during the first signal section the first signal generated using pseudo-random numbers.

The first communication control unit may generate the first signal based on a polynomial of X²³ + X⁵ + 1.

According to the present disclosure, a communication device is provided, including:
a state switching control unit that controls switching between a first state in which synchronization is established for communication with a communication partner device, a second state in which the communication is performed after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device;
a first communication control unit that repeatedly receives in a first cycle a first signal continuously transmitted during a first signal section from the communication partner device with the communication partner device being in the fourth state; and
a second communication control unit that transmits to the communication partner device a second signal synchronized with the first signal received by the first communication control unit.

The first signal may have a signal amplitude of equal to or less than a signal amplitude of the second signal.

The signal amplitude of the first signal may be 0.2 times or more and 0.8 times or less the signal amplitude of the second signal.

The signal amplitude of the first signal may be 0.4 times or more and 0.6 times or less the signal amplitude of the second signal.

The signal amplitude of the first signal may be 0.5 times as long as the signal amplitude of the second signal.

The first signal section may be equal to or shorter than a second signal section during which the second signal is continuously output.

The first signal section may be 0.5 times as long as the second signal section.

The first signal section may be 768 [nsec], and the first cycle may be 4816 [nsec].

The first signal section may be 1536 [nsec], and the first cycle may be 3280 [nsec].

The first signal and the second signal may have a same signal amplitude and a same cycle, and a length of the first signal section may be same as a length of a second signal section during which the second signal is continuously output.

The first signal section and the second signal section may each be 1536 [nsec], and the first signal and the second signal may each have a cycle of 3280 [nsec].

The communication device and the communication partner device may alternately transmit and receive information within a period allocated by a time division duplex (TDD) communication method.

According to the present disclosure, a communication system is provided, including:
a first communication device; and
a second communication device, the second communication device and the first communication device alternately transmitting and receiving information within a period allocated by a time division duplex (TDD) communication method,
wherein the second communication device includes
a state switching control unit that controls switching between a first state in which synchronization is established for communication with the first communication device, a second state in which the communication is performed after the synchronization is established in the first state, a third state in which the communication is intermittently stopped without disestablishing the synchronization, and a fourth state in which the communication is stopped for a longer period than the third state and when the communication is resumed, synchronization is re-established with the first communication device;
a first communication control unit that repeats in a first cycle an operation of continuously transmitting to the first communication device a first signal during a first signal section in the fourth state; and
a second communication control unit that, when receiving a second signal output from the first communication device in response to the first signal, transmits a third signal synchronized with the second signal and causes transition from the fourth state to the first state.

A third communication device may be included, the third communication device and the first communication device alternately transmitting and receiving information within a period allocated by the TDD communication method, the third communication device and the second communication device alternately transmitting and receiving information within a period allocated by the TDD communication method, and
the third communication device may include
a first communication control unit that, when repeatedly receiving in a first cycle a first signal continuously transmitted during a first signal section from the second communication device with the second communication device being in the fourth state, transmits the received first signal to the first communication device; and a second communication unit that, when receiving a second signal responsive to the first signal from the first communication device, transmits the second signal to the second communication device, and
a second communication control unit that, when receiving a third signal synchronized with the second signal from the second communication device, transmits the third signal to the first communication device and causes transition from the fourth state to the first state.

A plurality of third communication devices connected in a daisy chain between the first communication device and the second communication device may be included, and each of the plurality of third communication devices may transmit to the third communication device closer to the first communication device or the first communication device the first signal continuously transmitted during the first signal section from the second communication device in the first cycle in order, with the plurality of third communication devices and the second communication device being in the fourth state, receive a second signal synchronized with the first signal transmitted from the first communication device in order, transmit the second signal to the third communication device closer to the second communication device or the second communication device, and transitions from the fourth state to the first state.

### [Brief Description of Drawings]

[Fig. 1]

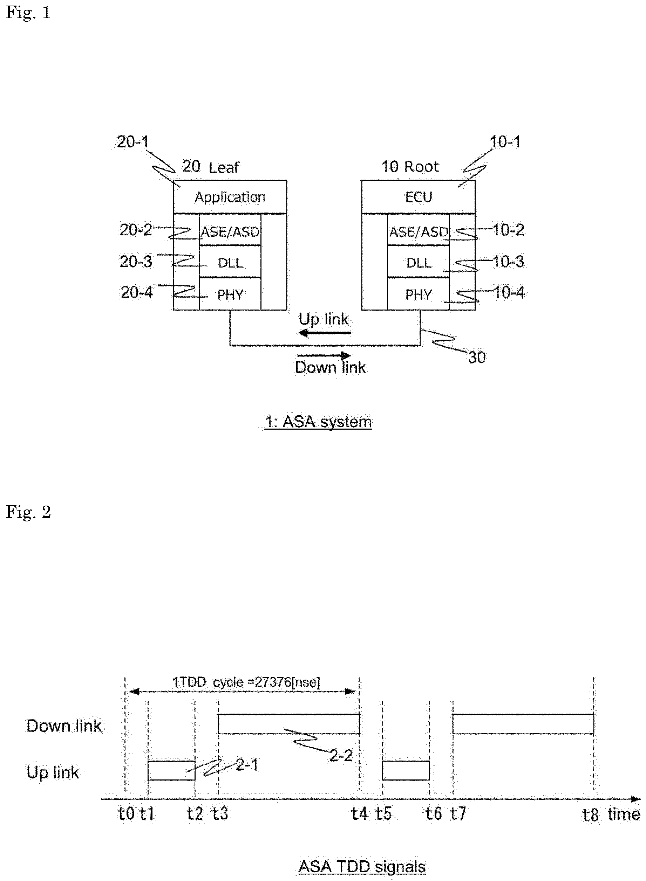

   Fig. 1 is a block diagram illustrating a schematic configuration of a communication system according to the present disclosure.
[Fig. 2]
   Fig. 2 is a diagram illustrating TDD communication compliant with the ASA standard.
[Fig. 3]

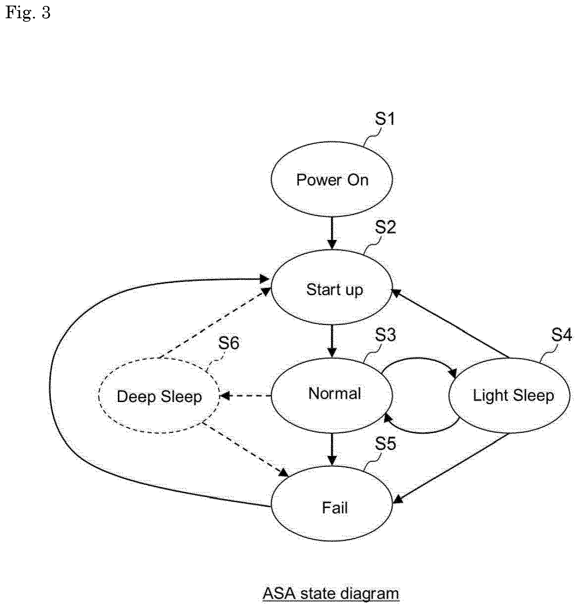

   Fig. 3 is a state transition diagram of the communication system compliant with the ASA standard.
[Fig. 4]

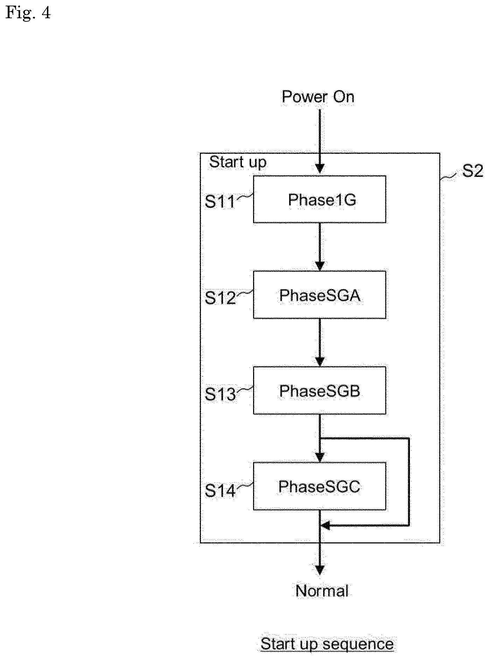

   Fig. 4 is a flowchart illustrating a processing procedure of start-up sequence performed with a root device and a leaf device being in a start-up state.
[Fig. 5]

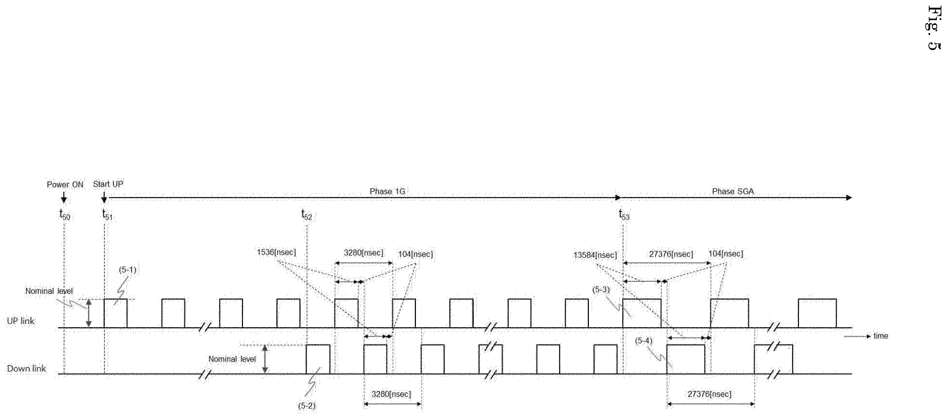

   Fig. 5 is a timing diagram of the start-up sequence.
[Fig. 6]

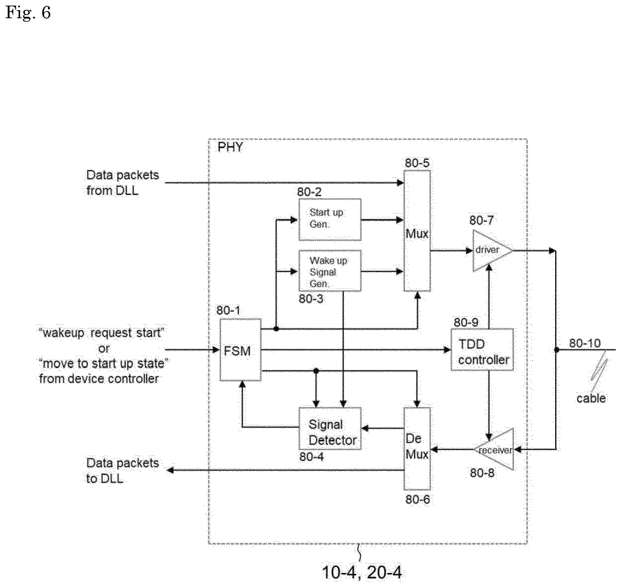

   Fig. 6 is a block diagram illustrating the internal configurations of a PHY unit in the root device and a PHY unit in the leaf device in Fig. 1.
[Fig. 7]

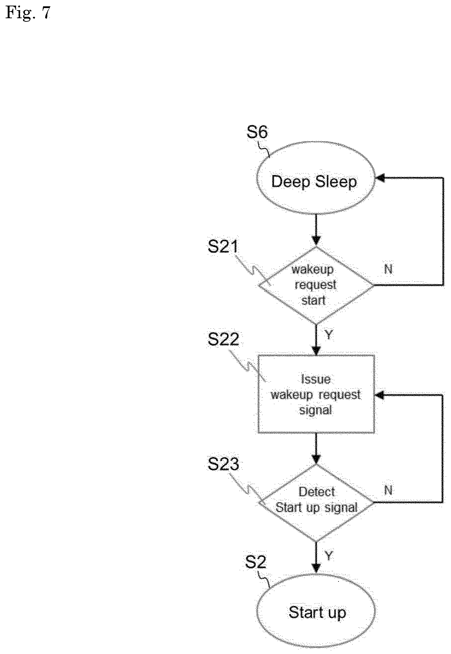

   Fig. 7 is a flowchart illustrating a processing procedure of wakeup sequence performed by the leaf device.
[Fig. 8]

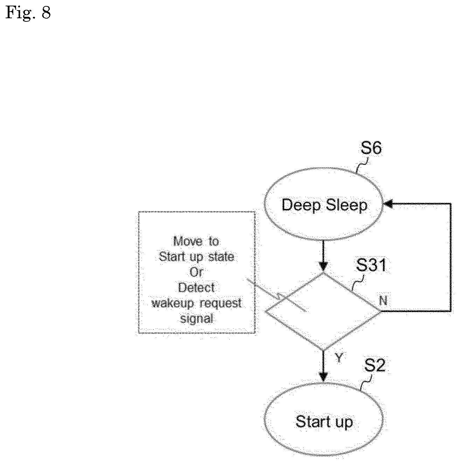

   Fig. 8 is a flowchart illustrating a processing procedure of wakeup sequence performed by the root device.
[Fig. 9]

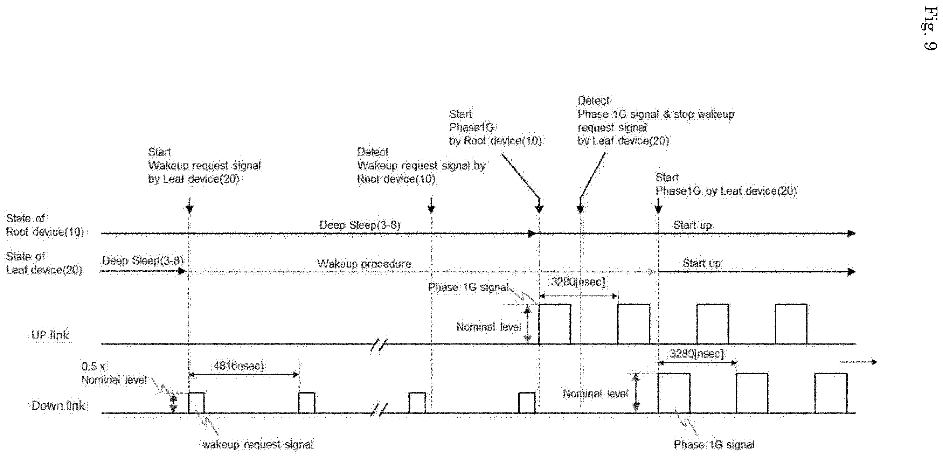

   Fig. 9 is a timing diagram of the wakeup sequence.
[Fig. 10]

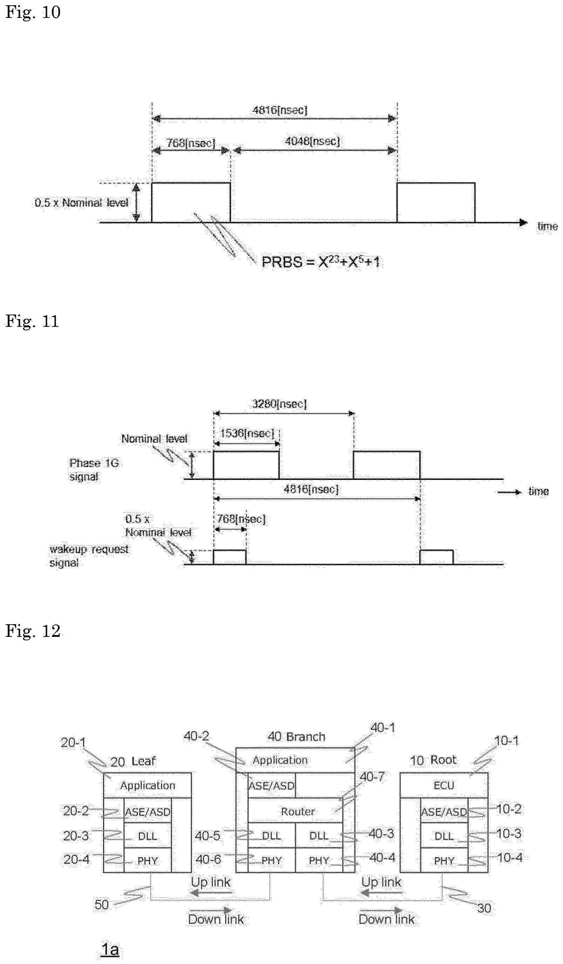

   Fig. 10 is a timing diagram of a wakeup request signal.
[Fig. 11]
   Fig. 11 is a timing diagram illustrating the relationship between a wakeup request signal and a Phase-1G signal.
[Fig. 12]
   Fig. 12 is a block diagram illustrating a schematic configuration of a communication system 1a including a root device, a leaf device, and a branch device.
[Fig. 13]

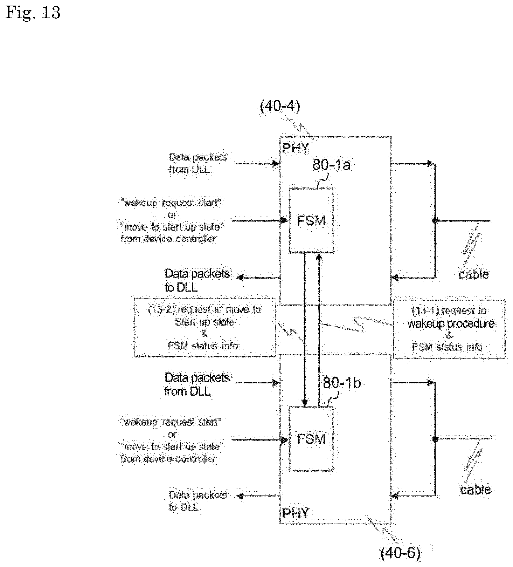

   Fig. 13 is a block diagram illustrating the internal configurations of a plurality of PHY units.
[Fig. 14]

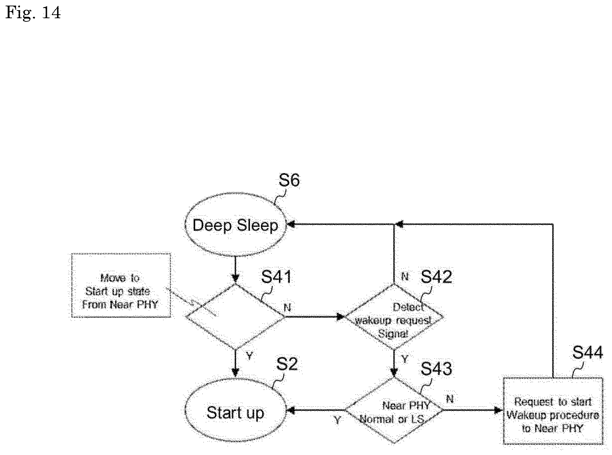

   Fig. 14 is a flowchart illustrating a processing procedure of a PHY unit, which is a far side PHY.
[Fig. 15]

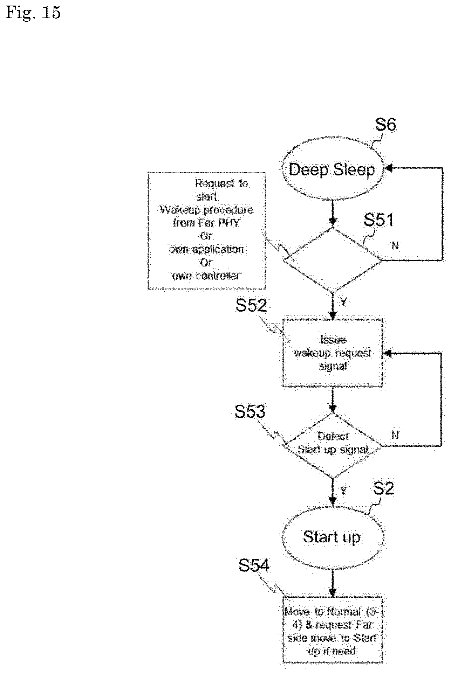

   Fig. 15 is a flowchart illustrating a processing procedure of a PHY unit, which is a near side PHY.
[Fig. 16]

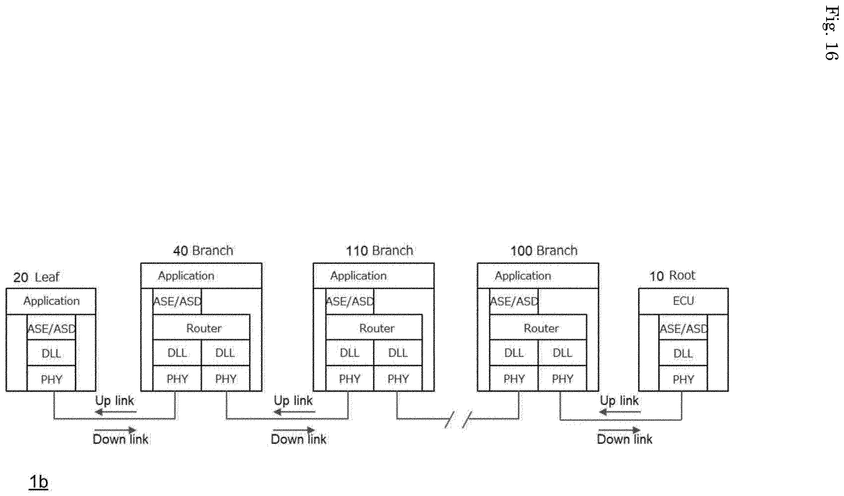

   Fig. 16 is a block diagram of a communication system in which a plurality of branch devices are daisy-chained.
[Fig. 17]

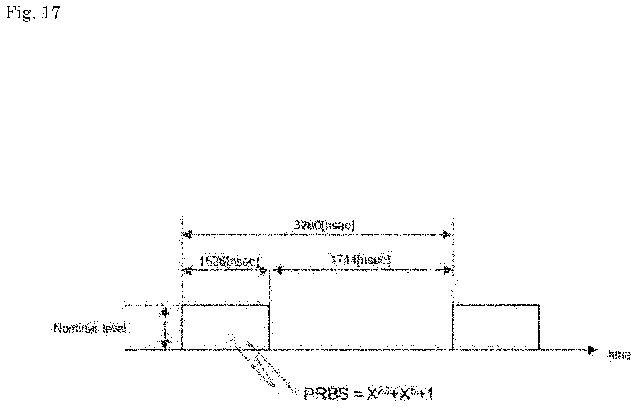

   Fig. 17 is a timing diagram of wakeup of a communication system 1 according to a second embodiment.
[Fig. 18]

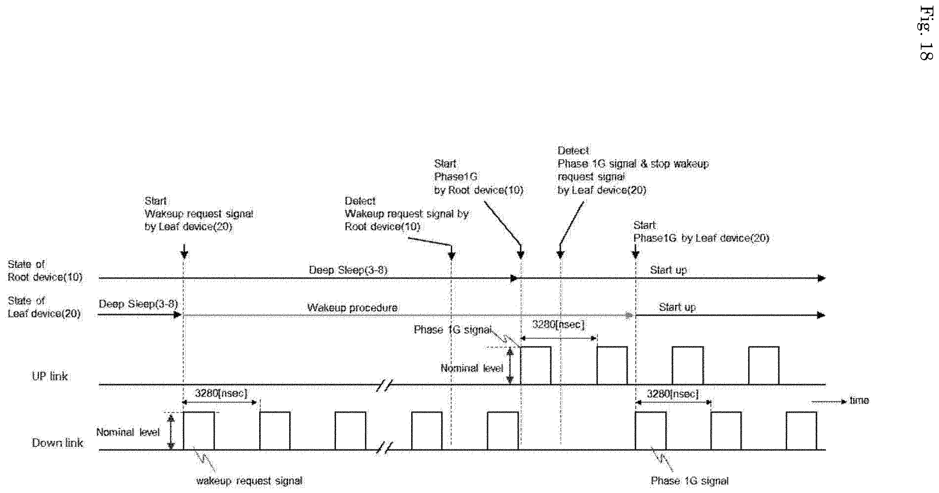

   Fig. 18 is a timing diagram of a wakeup request signal.

### [Description of Embodiments]

Hereinafter, embodiments of a communication device and a communication system 1 will be described with reference to the drawings. Although, main components of the communication device and the communication system 1 will be mainly described below, but the communication device and the communication system 1 may have components and functions that are not illustrated or described. The following description does not exclude components or functions that are not illustrated or described.

The communication system 1 according to the present disclosure performs time division multiplexing (TDD) communication between a plurality of communication devices. Hereinafter, the communication devices and the communication system 1, which are compliant with the ASA standard will be mainly described.

Fig. 1 is a block diagram illustrating a schematic configuration of the communication system 1 according to the present disclosure. The communication system 1 of Fig. 1 includes a root device (10) and a leaf device (20), which are compliant with the ASA standard. The root device (10) and the leaf device (20) alternately perform TDD communication. As used herein, a path through which information is transmitted from the root device (10) to the leaf device (20) is referred to as an up link, and a path through which information is transmitted from the leaf device (20) to the root device (10) is referred to as a down link. The up link and the down link are provided on a same cable (30).

The root device (10) includes an ECU (10-1), an ASE/ASD unit (10-2), a DLL unit (10-3), and a PHY unit (10-4). The ECU (10-1) controls the entire system, and at the same time receives and processes application signals such as video signals transmitted from the leaf device (20). The ECU (10-1) generates a control signal for controlling each unit. The ASE/ASD unit (10-2) performs ASE processing that encapsulates the control signal from the ECU (10-1) and ASD processing that decodes an encapsulated application signal from the leaf device (20) into the original application signal. The DLL unit (10-3) generates an up link packet including an application signal encapsulated by the ASE/ASD unit (10-2), extracts an application signal included in a down link packet transmitted from the leaf device (20), and transmits the extracted application signal to the ASE/ASD unit (10-2). The PHY unit (10-4) outputs a signal including the up link packet generated by the DLL unit (10-3) to the cable (30) in accordance with the TDD timing, receives a signal including a down link packet transmitted to the cable (30) from the leaf device (20), and transmits the received down link packet to the DLL unit (10-3).

The leaf device (20) includes an application unit (20-1), an ASE/ASD unit (20-2), a DLL unit (20-3), and a PHY unit (20-4). The leaf device (20) operates in accordance with the control signal transmitted from the root device (10) through the up link, and transmits a down link packet including an application signal generated by the application unit (20-1) of the leaf device (20) to the root device (10) through the down link.

The application unit (20-1) generates an application signal such as a video signal and an audio signal. The ASE/ASD unit (20-2) performs ASE processing that encapsulates the application signal and ASD processing that decodes an encapsulated control signal from the root device (10).

The DLL unit (20-3) generates a down link packet including the application signal encapsulated by the ASE/ASD unit (20-2), extracts an encapsulated control signal from an up link packet transmitted from the root device (10), and transmits the extracted encapsulated control signal to the ASE/ASD unit (20-2).

The PHY unit (20-4) outputs a signal including the down link packet generated by the DLL unit (20-3) to the cable (30) in accordance with the TDD timing, receives a signal including an up link packet transmitted to the cable (30) from the root device (10), and transmits the received up link packet to the DLL unit (20-3).

Fig. 2 is a diagram illustrating TDD communication compliant with the ASA standard. As illustrated in Fig. 2, according to the ASA standard, one cycle (time t0 to t4) of the TDD communication method is 27376 ns. Time t0 to t1 and time t2 to t3 are signal switching periods for up link signals and down link signals, respectively. Time t1 to t2 is a transmission period for up link packets, and time t3 to t4 is a transmission period for down link packets.

Normally, the application signal output from the leaf device (20) has a signal capacity much larger than the signal capacity of a control signal output from the root device (10). Therefore, as illustrated in Fig. 2, in the ASA standard using the TDD communication method, a period (time t3 to t4) allocated to the down link through which application signals and the like are transmitted is set to be longer than a period (time t1 to t2) allocated to the up link through which control signals and the like are transmitted.

Fig. 3 is a state transition diagram of the communication system 1 compliant with the ASA standard. Fig. 3 illustrates an outline of the state transition of the communication system 1, and is not the original state transition diagram specified in the ASA standard. The root device (10) and the leaf device (20) in Fig. 1 change their states according to the state transition diagram of Fig. 3. As illustrated in Fig. 3, the communication system 1 compliant with the ASA standard has a start-up state (first state) S2, a normal state (second state) S3, a light sleep state (third state) S4, a fail state S5, and a deep sleep state (fourth state) S6. As described above, the light sleep state is a state in which communication is suspended at a time interval which is in a range of a TDD switching time to a time that allows the synchronization between the devices to be maintained, and briefly, is a state in which the communication is intermittently stopped without disestablishing the synchronization.

When the root device (10) and the leaf device (20) are powered on (S1), both devices transition to the start-up state S2. The start-up state is a state in which processing of establishing the synchronization between the connected root device (10) and leaf device (20) is performed in order to start TDD communication.

When the processing of establishing the synchronization between the root device (10) and the leaf device (20) is completed, they transition to the normal state S3. In the normal state, the root device (10) and the leaf device (20) alternately transmit and receive information by the TDD communication method.

The root device (10) and the leaf device (20) may transition from the normal state to the light sleep state. When transitioning to the light sleep state, they repeat an operation of stopping the TDD communication for a set period of about 100 ms and returning to the normal state after the set period has elapsed. Alternatively, when failing to transition from the light sleep state to the normal state, they return to the start-up state to perform the processing of establishing the synchronization between the root device (10) and the leaf device (20) again.

When TDD communication errors occur continuously with the devices being in the normal state or the light sleep state, the devices transition to the fail state. Thereafter, they transition from the fail state to the start-up state, and then the processing of establishing the synchronization between the root device (10) and the leaf device (20) is performed again.

Fig. 4 is a flowchart illustrating a processing procedure of start-up sequence performed with the root device (10) and the leaf device (20) being in the start-up state. First, synchronization with a 1 GHz clock signal is established between the root device (10) and the leaf device (20) (step S11). As used herein, this clock signal is referred to as a Phase 1G signal (second signal).

Next, synchronization of TDD cycles is established (step S12). In step S12, the root device (10) and the leaf device (20) transmit and receive Phase SGA signals.

Next, TDD communication is established with the signal sections for the down link and the up link within one TDD cycle period being the same as those in the normal state (steps S13, S14). Thereafter, they transition to the normal state and start TDD communication. As used herein, step S11 is referred to as Phase 1G processing, step S12 is referred to as Phase SGAprocessing, step S13 is referred to as Phase SGB processing, and step S14 is referred to as Phase SGC processing.

Fig. 5 is a timing diagram of the start-up sequence. Fig. 5 illustrates timings of Phase 1G signals and Phase SGA signals, which are transmitted through the up link and the down link when the processing of steps S11 and S12 in Fig. 4 are performed. At time t50, the root device (10) and the leaf device (20) are powered on, and each device performs initial settings and the like. After the initial settings, the leaf device (20) enters a waiting state for receiving a Phase 1G signal transmitted from the root device (10).

The root device (10) outputs a Phase 1G signal to the up link from time t51 when the time required to perform initial settings and the like has elapsed (5-1). The Phase 1G signal is a 1 GHz signal consisting of a specific pattern including a control signal and a predetermined pseudo-random bit sequence (PRBS) signal following the specific pattern. One signal section during which the Phase 1G signal is output is 1536 [nsec]. The root device (10) repeatedly transmits the Phase 1G signal in a cycle of 3280 [nsec] including the one signal section.

When the leaf device (20) receives the Phase 1G signal output from the root device (10) and then becomes ready to output a Phase 1G signal, the leaf device (20) transmits a Phase 1G signal (third signal) after 104 [nsec] has elapsed from the end of the one signal section of the Phase 1G signal of the root device (10) (5-2).

As illustrated in Fig. 5, the root device (10) and the leaf device (20) alternately transmit and receive Phase 1G signals, and use the received Phase 1G signals to perform clock synchronization with the Phase 1G signals to be transmitted. When each of the root device (10) and the leaf device (20) has completed the clock synchronization to successfully receive Phase 1G signals, each device writes, to the control signal included in the Phase 1G signal to be transmitted, information indicating that the device is ready to transition to Phase SGA of step S12 in Fig. 4, and then transmits the information.

When both the root device (10) and the leaf device (20) have successfully received the Phase 1G signals and each confirm that the communication partner has also successfully received the Phase 1G signal using the control signal included in the Phase 1G signal received at the same time, the processing proceeds from step S11 to step S12 in Fig. 4 (time t53).

When the processing proceeds to step S12 in Fig. 4, the root device (10) outputs a Phase SGA signal (5-3) to the up link. The Phase SGA signal is a signal consisting of a specific pattern including a control signal and a predetermined PRBS signal following the specific pattern, and one signal section therefor is 13584 [nsec]. The root device (10) repeatedly transmits the Phase SGA signal in a cycle of 27376 [nsec] including the one signal section.

In step S12, the leaf device (20) starts outputting a Phase SGA signal after 104 [nsec] have elapsed from the end of the one signal section of the Phase SGA signal output by the root device (10) (5-4).

As illustrated in Fig. 5, the root device (10) and the leaf device (20) alternately transmit and receive Phase SGA signals, and use the received Phase SGA signals to perform training of a reception equalizer and synchronization of TDD cycles.

As illustrated in Fig. 4, the processing of step S13 is performed after step S12, the processing in the start-up state ends, and then the devices transition to the normal state S3.

Incidentally, the state transition diagram of Fig. 3 includes the deep sleep state S6. The deep sleep state S6 is a state in which the devices in the communication system 1 compliant with the ASA suspend their operations for a sufficiently longer time than the light sleep state S4. However, the current ASA standard ver. 1.01 does not specify the details of operations for the deep sleep state.

On the other hand, in a case where the leaf device (20) illustrated in Fig. 1 is, for example, a display and the root device (10) is, for example, a video player, it is expected that when the communication system 1 is suspended, the user touches a screen of the display to start up the communication system 1 and then watches a video. In that case, the leaf device (20), which is a display, is required to start up the root device (10), which is a video player, by some means.

In a case where the leaf device (20) is, for example, a camera module, it is expected that when only a camera unit operates and detects some kind of image, the leaf device (20) requests to start up the root device (10) in order to notify the root device (10) of that detection. For example, it is expected that when a surveillance camera detects a face, skin color, and the like from image data of a certain region and determines that a person approaches a surveillance target, the surveillance camera side starts up the communication system 1 to determine the future response. However, the current ASA standard ver. 1.01 does not specify a processing procedure for the leaf device (20) in the deep sleep state starting up the root device (10).

Therefore, the communication device and communication system 1 according to the present disclosure are characterized in that the above-described problems can be resolved.

### (First Embodiment)

A communication device and a communication system 1 according to a first embodiment have the same block configuration as in Fig. 1. Both the root device (10, a first communication device) and the leaf device (20, a second communication device) in Fig. 1 correspond to communication devices according to the first embodiment.

Fig. 6 is a block diagram illustrating the internal configurations of the PHY unit (10-4) in the root device (10) and the PHY unit (20-4) in the leaf device (20) in Fig. 1. As illustrated in Fig. 6, the PHY units (10-4) and (20-4) of both devices have the same configuration. The PHY units (10-4) and (20-4) in Fig. 6 each have a configuration in which it is expected to receive a wakeup request signal (first signal) from another communication device (root device (10) or leaf device (20)). A timing diagram of the wakeup request signal will be described later. Fig. 6 illustrates a block configuration related to a wakeup sequence in each of the PHY units (10-4) and (20-4).

The PHY unit (10-4), (20-4) in Fig. 6 includes a state machine unit (FSM, a state switching control unit) (80-1), a start-up generator (Start Up Gen., a second communication control unit, 80-2), a wakeup signal generator (Wakeup Signal Gen., a first communication control unit, 80-3), a signal detector (80-4), a multiplexer (Mux, 80-5), and a demultiplexer (DeMux, 80-6), a TDD controller 80-9, a driver (80-7), and a receiver (80-8).

The FSM (80-1) is a state machine and controls the wakeup sequence in accordance with Fig. 3 and Figs. 9 and 10 described later. A wakeup request start command or a start-up state transition command is input to the FSM (80-1) from the communication partner device.

The start-up generator (80-2) generates a signal necessary for the start-up sequence illustrated in Fig. 4 and outputs the signal to the multiplexer (80-5).

The wakeup signal generator (80-3) generates a wakeup request signal, which will be described later, and outputs the wakeup request signal to the multiplexer (80-5).

The multiplexer (80-5) selects on the basis of a control signal from the FSM (80-1) a data packet output from the DLL unit (10-3, 20-3), or a signal output from the start-up generator (80-2), or a wakeup request signal output from the wakeup signal generator (80-3), and outputs the selected signal to the driver (80-7). The driver (80-7) outputs the signal selected by the multiplexer (80-5) to the cable (80-10) in accordance with an instruction from the TDD controller (80-9).

More specifically, the driver (80-7) outputs the signal selected by the multiplexer (80-5) to the opposing device via a cable (80-10) by the TDD communication method illustrated in Fig. 2. Here, the cable (80-10) is a cable (80-10) for connecting the root device (10) and the leaf device (20) illustrated in Fig. 1.

The receiver (80-8) receives the signal output from the opposing device via the cable (80-10). The demultiplexer (80-6) transmits the signal received by the receiver (80-8) to the signal detector (80-4) or the DLL unit (10-3, 20-3) in accordance with the control from the FSM (80-1). More specifically, the demultiplexer (80-6) outputs a data packet, which is the received signal, to the signal detector (80-4) for the start-up state S2 or the deep sleep state S6, and to the DLL unit (10-3, 20-3) for the normal state S3, the light sleep state S4, or the fail state S5.

The signal detector (80-4) detects the Phase 1G signal or the wakeup request signal received via the cable (80-10), the receiver (80-8), and the demultiplexer (80-6), and outputs the detection result to the FSM (80-1).

As described later, the state machine unit (80-1) controls switching between the start-up state, the normal state, the light sleep state, and the deep sleep state with the root device (10). The wakeup signal generator (80-3) repeats in a first cycle an operation of continuously transmitting to the root device (10) a wakeup request signal during a first signal section in the deep sleep state. When receiving the Phase 1G signal output from the root device (10) in response to the wakeup request signal, the start-up generator (80-2) transmits a Phase 1G signal synchronized with the received Phase 1G signal to the root device (10). When the start-up generator (80-2) transmits the Phase 1G signal, the state machine unit (80-1) causes the device to transition from the deep sleep state to the start-up state.

Hereinafter, the wakeup sequence performed by the leaf device (20) and the root device (10) will be described assuming that the entire communication system 1 is in the deep sleep state S6. In the deep sleep state S6, the entire communication system 1 is powered on, but communication between the root device (10) and the leaf device (20) is stopped.

Fig. 7 is a flowchart illustrating a processing procedure of the wakeup sequence performed by the leaf device (20). A controller (not illustrated) in the leaf device (20) in the deep sleep state transmits a wakeup request start command to the FSM (80-1) in order to transition to the normal state (Yes at S21).

In response to this command, the FSM (80-1) of the leaf device (20) issues a wakeup request signal (S22). More specifically, the FSM (80-1) controls the wakeup signal generator (80-3) to generate a wakeup request signal for one signal section. The FSM (80-1) also controls the multiplexer (80-5) and causes the multiplexer (80-5) to select the wakeup request signal generated by the wakeup signal generator (80-3). Further, the FSM (80-1) controls the TDD controller (80-9). As a result, the TDD controller (80-9) controls the driver (80-7) to output the wakeup request signal to the cable (80-10) for one signal section (S22).

The signal detector (80-4) performs a detection operation on the Phase 1G signal output from the root device (10) within a period other than the one signal section for the wakeup request signal output by the signal detector (80-4). The detection result is output to the FSM (80-1).

When the FSM (80-1) of the leaf device (20) detects the Phase 1G signal from the root device (10), the FSM (80-1) determines that the root device (10) has transitioned to the start-up state S2, and then transitions to the start-up state S2 (YES at S23). After that, the start-up sequence illustrated in Fig. 4 is performed.

In this way, after outputting the wakeup request signal to the cable (80-10), the leaf device (20) transitions from the deep sleep state to the start-up state in response to receiving the Phase 1G signal from the root device (10).

When the Phase 1G signal is not detected, the FSM (80-1) of the leaf device (20) determines that the root device (10) is in the deep sleep state S6, and repeats the processing of S22 and the subsequent steps to transmit the wakeup request signal again (NO at S23). As a result, the leaf device (20) periodically outputs the wakeup request signal until a Phase 1G signal is received from the root device (10).

Fig. 8 is a flowchart illustrating a processing procedure of the wakeup sequence performed by the root device (10). When the root device (10) is in the deep sleep state S6, the ECU (10-1) in Fig. 1 instructs the FSM (80-1) to wait for receiving an input of a start-up state transition ("move to start up state") command. At this time, the signal detector (80-4) enters a state for an operation of detecting a wakeup request signal.

When a start-up state transition command is input to the FSM (80-1) or the signal detector (80-4) detects a wakeup request signal, the FSM (80-1) immediately transitions from the deep sleep state S6 to the start-up state S2 (YES at S31). After that, the start-up sequence illustrated in Fig. 4 is performed.

In S31, when a start-up state transition command is not input to the FSM (80-1) or when the signal detector (80-4) does not detect a wakeup request signal, the deep sleep state S6 is maintained. The FSM (80-1) waits for receiving an input of a start-up state transition command, and the signal detector (80-4) continues to perform the operation of detecting a wakeup request signal.

By the above procedure, the wakeup operation from the leaf device (20) of the communication system 1 in which the root device (10) and the leaf device (20) illustrated in Fig. 1 are connected to each other can be achieved.

Fig. 9 is a timing diagram of the wakeup sequence, Fig. 10 is a timing diagram of the wakeup request signal, and Fig. 11 is a timing diagram illustrating the relationship between the wakeup request signal and the Phase 1G signal. Fig. 9 illustrates the timing at which the leaf device (20) outputs the wakeup request signal when the entire communication system 1 is in the deep sleep state.

As illustrated in Fig. 10, the wakeup request signal generated by the wakeup signal generator (80-3) in Fig. 6 consists of a PRBS signal expressed by a polynomial of X²³ + X⁵ + 1, and has the highest nominal frequency 1 GHz. The wakeup request signal is for repeating an operation of outputting the PRBS signal during one signal section of 768 [nsec], stopping the output, and outputting the PRBS signal again during one signal section of 768 [nsec] after 4048 [nsec] has elapsed. In this way, the wakeup request signal is a periodic signal for repeatedly outputting the PRBS signal during one signal section of 768 [nsec] in a cycle of 4816 [nsec].

As illustrated in Figs. 9 and 10, the leaf device (20) in the deep sleep state periodically outputs the above-described wakeup request signal to the cable (80-10). This wakeup request signal is transmitted to the root device (10) via the cable (80-10) through the down link according to the TDD communication method. The leaf device (20) periodically transmits the wakeup request signal until the Phase 1G signal is received from the root device (10). When receiving the Phase 1G signal, the leaf device (20) immediately stops the transmission of the wakeup request signal.

As illustrated in Figs. 9 and 11, when receiving the wakeup request signal, the root device (10) outputs to the cable (80-10) a Phase 1G signal during one signal section of 1536 [nsec] in a cycle of 3280 [nsec]. This Phase 1G signal is transmitted to the leaf device (20) via the cable (80-10) through the up link according to the TDD communication method.

As illustrated in Fig. 11, the signal amplitude of the wakeup request signal is equal to or less than the signal amplitude of the Phase 1G signal. Preferably, the signal amplitude of the wakeup request signal is 0.2 times or more and 0.8 times or less the signal amplitude of the Phase 1G signal. More preferably, the signal amplitude of the wakeup request signal is 0.4 times or more and 0.6 times or less the signal amplitude of the Phase 1G signal. Even more preferably, the signal amplitude of the wakeup request signal is 0.5 times as long as the signal amplitude of the Phase 1G signal. In this way, by setting the signal amplitude of the wakeup request signal to be smaller than that of the Phase 1G signal, negative electrical effects can be prevented such as damage to some circuit components in the root device (10) and the leaf device (20) even when both signals are transmitted and received at the same time.

As illustrated in Fig. 11, in order for the root device (10) to output the Phase 1G signal in response to the wakeup request signal from the leaf device (20), a time slot for the wakeup request signal and a time slot for the Phase 1G signal are reserved so that they do not overlap temporally. This makes it easy for the leaf device (20) to detect a Phase 1G signal, and easy for the root device (10) to detect a wakeup request signal.

As illustrated in Fig. 9, when receiving the Phase 1G signal from the root device (10), the leaf device (20) synchronizes with the received Phase 1G signal a Phase 1G signal with the same signal level to transition to the start-up state.

Incidentally, the ASA standard also assumes that the root device (10) and the leaf device (20) are connected through a branch device (40). Fig. 12 is a block diagram illustrating a schematic configuration of a communication system 1a including the root device (10), the leaf device (20), and the branch device (40). The internal configurations of the root device (10) and the leaf device (20) in Fig. 12 are the same as those in Fig. 1. The branch device (40) in Fig. 12 includes an application unit (40-1), an ASE/ASD unit (40-2), a router (40-7), a plurality of DLL units (40-3) and (40-4), and a plurality of PHY units (40-4) and (40-6). In the communication system 1a of Fig. 12, it is assumed that the root device (10) recognizes in advance that each of the leaf device (20) and the branch device (40) may transmit a wakeup request signal.

Fig. 13 is a block diagram illustrating the internal configuration of the plurality of PHY units (40-4) and (40-6). As illustrated in Fig. 13, the PHY unit (40-4) includes an FSM (80-1a, a first state switching control unit), and the PHY unit (40-5) includes an FSM (80-1b, a second state switching control unit). To the FSM (80-1a), a wakeup request start command or a start-up state transition command is input from the root device (10). To the FSM (80-1b), a wakeup request start command or a start-up state transition command is input from the leaf device (20). Although components other than the FSM (80-1a) and the FSM (80-1b) are omitted in Fig. 13, each of the PHY unit (40-4) and the PHY unit (40-6) has the same internal configuration as that of Fig. 6.

The FSM (80-1a) in the PHY unit (40-4) and the FSM (80-1b) in the PHY unit (40-6) transmit and receive information to and from each other. Specifically, the FSM (80-1b) in the PHY unit (40-6) notifies the FSM (80-1a) in the PHY unit (40-4) that a wakeup request start command has arrived from the leaf device (20), and also notifies the FSM (80-1a) of the state of the leaf device (20) (13-1). The FSM (80-a) in the PHY unit (40-4) notifies the FSM (80-1b) in the PHY unit (40-6) of a request to transition to the setup state, and also notifies the FSM (80-1b) of the state of the root device (10) (13-2).

The router (40-7) determines the transmission destination of a transmission packet, determines whether the packet is a packet for the branch device (40) itself, or a packet to be transmitted to another device, and transmits encapsulated information to the DLL unit (40-3), the DLL unit (40-5), or the ASE/ASD unit (40-2).

Even in a case where the branch device (40) is connected between the root device (10) and the leaf device (20) as illustrated in Fig. 12, each device performs the state transition illustrated in Fig. 3. The leaf device (20) enters the deep sleep state either when the entire communication system 1a is in the deep sleep state, or when the root device (10) to the branch device (40) are in the normal state or the light sleep state and the branch device (40) to the leaf device (20) are in the deep sleep state. In this way, it is assumed that the leaf device (20) enters the deep sleep state in either of the two cases described above. In either case, it is necessary to enable the leaf device (20) to return to the normal state from the deep sleep state under its own control.

The above-described two cases will be described below for the processing procedure of the leaf device (20) to perform the wakeup operation in the case where the root device (10) and the leaf device (20) are connected to each other through the branch device (40) illustrated in Fig. 12.

As described above, the branch device (40) illustrated in Fig. 12 has two sets, each consisting of PHY and DLL. The PHY unit (40-6) and the DLL unit (40-5) makes one set, and the PHY unit (40-4) and the DLL unit (40-3) makes the other set. As used herein, the PHY unit (40-6) connected to the leaf device (20) is referred to as a far side PHY, and the PHY unit (40-4) connected to the root device (10) is referred to as a near side PHY.

The FSM (80-1a) controls switching between the start-up state, the normal state, the light sleep state, and the deep sleep state with the root device (10). The FSM (80-1b) controls switching between the start-up state, the normal state, the light sleep state, and the deep sleep state with the leaf device (20).

When the PHY unit (40-4) repeatedly receives in a first cycle a wakeup request signal continuously transmitted during a first signal section from the leaf device (20) with the leaf device (20) being in the deep sleep state,
the PHY unit (40-4) transmits the received wakeup request signal to the root device (10). When the PHY unit (40-6) receives a Phase 1G signal responsive to the wakeup request signal from the root device (10), the PHY unit (40-6) transmits the Phase 1G signal to the leaf device (20). When the Phase 1G signal is transmitted from the root device (10), the FSM (80-1a) transitions from the deep sleep state to the start-up state.

Fig. 14 is a flowchart illustrating a processing procedure of the PHY unit (40-6), which is the far side PHY, and Fig. 15 is a flowchart illustrating a processing procedure of the PHY unit (40-4), which is the near side PHY. The PHY unit (40-4) and the PHY unit (40-6) each have the internal configuration illustrated in Fig. 13.

First, a case will be described in which the leaf device (20) performs the wakeup operation with all devices being in the deep sleep state. The leaf device (20) performs the operations according to the flowchart of Fig. 7 described above, and thus the description thereof will be omitted.

When the signal detector (80-4) of the far side PHY receives a wakeup request signal from the leaf device (20) with the far side PHY of the branch device (40) being in the deep sleep state (YES at S42), the signal detector (80-4) checks the state of the near side PHY (13-2 in Fig. 13).

If the state of the near side PHY is in the normal state S3 or the light sleep state S4 (YES at S43), the start-up operation is started immediately. After that, the start-up sequence illustrated in Fig. 4 is performed in the same way as described for the root device (10). In this way, if the root device (10) is in the normal state S3 or the light sleep state S4 when the branch device (40) receives a wakeup request signal from the leaf device (20), the branch device (40) immediately transitions from the deep sleep state to the start-up state.

On the other hand, if the state of the near side PHY is not in the normal state S3 or the light sleep state S4 (NO at S43) when the wakeup request signal is received from the leaf device (20), an instruction to start the wakeup operation to establish communication with the root device (10) is issued to the far side PHY (13-1 in Fig. 13) (S44). In this case, the branch device (40) maintains the deep sleep state S6 until communication between the near side PHY and the root device (10) is established.

When the near side PHY transitions to the normal state S3 and the far side receives a start-up state transition command (13-2 in Fig. 13) (YES at S41), the far side immediately transitions to the start-up state S2. After that, the start-up sequence (Fig. 4) is performed in the same way as described for the root device (10). Through these operations, the leaf device (20) and the branch device (40) perform the wakeup operation.

Next, the wakeup sequence with the near side PHY of the branch device (40) being in the deep sleep state will be described on the basis of the flowchart of Fig. 15. When the wakeup operation start command (13-1 in Fig. 13) is received from the far side PHY (YES at S51), the near side PHY transmits a wakeup request signal in order to immediately establish communication with the root device (10) (S52, a first communication control unit). This wakeup request signal is transmitted to the root device (10) via the cable (80-10). After that, the near side PHY of the branch device (40) performs the same operation as in Fig. 7. Specifically, when the FSM (80-1) of the branch device (40) detects the Phase 1G signal from the root device (10), the FSM (80-1) determines that the root device (10) has transitioned to the start-up state S2, and then transitions to the start-up state S2 (YES at S23).

When the near side PHY of the branch device (40) establishes communication with the root device (10), an instruction to transition to the start-up state S2 is issued to the far side PHY of the branch device (40) (13-2 in Fig. 13), and the branch device (40) itself transitions to the normal state S3 (S54).

The processing procedure in which the root device (10) in the deep sleep state receives a wakeup request signal from the near side PHY of the branch device (40) and transitions to the start-up state S2 is the same as the flowchart of Fig. 8.

With the above procedure, the leaf device (20) transmits a wakeup request signal with the leaf device (20) illustrated in Fig. 12 being in the deep sleep state, so that each device can be transitioned to the start-up state.

The processing procedure of the branch device (40) described above is also applicable to a communication system 1b in which a plurality of branch devices (40) are daisy-chained between the root device (10) and the leaf device (20), as illustrated in Fig. 16. Each branch device (40) in Fig. 16 has the same internal configuration as the branch device (40) in Fig. 12. The PHY unit in each branch device (40) in Fig. 15 has the same internal configuration as that in Fig. 13.

The root device (10) in Fig. 16 reads from the built-in register of each device (20, 40, 100, 110) information as to whether the device is compatible with the deep sleep state at start-up, and determines whether or not the device can transition from the deep sleep state to another state. If all connected devices can transition from the deep sleep state, the following processing is allowed.

In the case where initially the leaf device (20) performs the wakeup operation with all devices being in the deep sleep state, the above-described procedure is performed in which the wakeup operation is performed by the leaf device (20), the branch device (40), the branch devices (40), (110), ..., the branch device (100), and the root device (10) in this order to cause the root device (10) to transition to the start-up state S2. As a result, communication between the root device (10) and each branch device (40), (110), and (100) can be established, then communication between the branch devices (40) toward the leaf device (20) can be established, and finally, communication between the branch device (40) and the leaf device (20) can be established. In this way, communication is established between the plurality of branch devices in order from the side closest to the root device (10).

In the system illustrated in Fig. 16, in order to establish communication between devices to the root device (10) starting from a branch device (40) in the middle of the network, for example, the branch device (110), the wakeup operation is started from the start of wakeup operation from the application or controller (S51 in Fig. 15) illustrated in Fig. 15 of the near side PHY of the branch device (110), so that communication from the branch device (110) to the root device (10) can be established according to the procedure described above.

In this way, in the communication system 1 according to the first embodiment, the leaf device (20) repeatedly outputs the wakeup request signal with the leaf device (20) being in the deep sleep state, and when receiving a Phase 1G signal transmitted by the root device (10) in response to receiving this wakeup request signal, the leaf device (20) stops outputting the wakeup request signal, outputs from the leaf device (20) a Phase 1G signal synchronized with the received Phase 1G signal, and transitions to the start-up state. As a result, the leaf device (20) can take action on its own to be changed from the deep sleep state.

In the case where a branch device (40) is connected between the root device (10) and the leaf device (20), the wakeup request signal output by the leaf device (20) is transmitted to the root device (10) through the branch device (40). When receiving the Phase 1G signal from the root device (10), the branch device (40) immediately transitions to the start-up state. In the branch device (40), the Phase 1G signal output by the root device (10) in response to receiving the wakeup request signal is transmitted to the leaf device (20) through the branch device (40). When receiving the Phase 1G signal, the leaf device (20) can stop outputting the wakeup request signal and transition to the start-up state.

### (Second Embodiment)

In the communication system according to the first embodiment, as illustrated in Figs. 9 and 11, the signal amplitude of the wakeup request signal output by the leaf device (20) is set to be less than the signal amplitude of the Phase 1G signal output by the root device (10) (for example, about 0.5 times), and one signal section for the wakeup request signal is set to be less than one signal section for the Phase 1G signal (for example, about 0.5 times). The leaf device (20), which originally has a function of generating a signal for the same signal amplitude and the same one signal section as the Phase 1G signal output from the root device (10), is required to have, in addition to that function, a function of generating a wakeup request signal with a signal amplitude and one signal section different from those of the Phase 1G signal, as described above. On the other hand, in a second embodiment, a wakeup request signal having the same signal amplitude and the same one signal section as the Phase 1G signal is generated.

A communication system 1 according to the second embodiment has the same configuration as that in Fig. 1, Fig. 12, or Fig. 16. The internal configuration of each device in the communication system 1 according to the second embodiment is also the same as that in Fig. 1, Fig. 6, Fig. 12, or Fig. 13.

Fig. 17 is a timing diagram of wakeup of the communication system 1 according to the second embodiment, and Fig. 18 is a timing diagram of a wakeup request signal. The leaf device (20) in the deep sleep state repeatedly outputs in the same cycle as that for a Phase 1G signal generated by the root device (10) a wakeup request signal with the same signal amplitude and the same one signal section as the Phase 1G signal. Since the leaf device (20) is originally equipped with a function of generating a Phase 1G signal, the leaf device (20) can easily generate a wakeup request signal with the same signal amplitude and the same one signal section as the Phase 1G signal.

When receiving the wakeup request signal from the leaf device (20), the root device (10) recognizes that the leaf device (20) has started the wakeup sequence, and outputs a Phase 1G signal. Since the wakeup request signal has the same signal amplitude and the same one signal section as the Phase 1G signal but is transmitted in the deep sleep state, the root device (10) determines that it is a wakeup request signal. The root device (10) outputs the Phase 1G signal at a timing that does not overlap with one signal section for the wakeup request signal.

When receiving the Phase 1G signal from the root device (10), the leaf device (20) immediately stops outputting the wakeup request signal, synchronizes it with the Phase 1G signal from the root device (10), outputs a Phase 1G signal with the same signal amplitude and the same one signal section, and transitions to the start-up state.

In this way, in the second embodiment, the wakeup request signal from the leaf device (20) with the same signal amplitude and the same one signal section as the Phase 1G signal output from the root device (10) is output in the same cycle as the Phase 1G signal. This makes it easy for the leaf device (20) to generate a wakeup request signal, and makes it possible to simplify the internal configuration of the leaf device (20).

The present technology can have the following configurations.
(1) A communication device, including:
   a state switching control unit that controls switching between a first state in which synchronization is established for communication with a communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device;
   a first communication control unit that repeats in a first cycle an operation of continuously transmitting to the communication partner device a first signal during a first signal section in the fourth state; and
   a second communication control unit that, when receiving a second signal output from the communication partner device in response to the first signal, transmits a third signal synchronized with the second signal to the communication partner device,
   wherein when the second communication control unit transmits the third signal, the state switching control unit causes transition from the fourth state to the first state.
(2) A communication device, including:
   a first state switching control unit that controls switching between a first state in which synchronization is established for communication with a first communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the first communication partner device;
   a second state switching control unit that controls switching between the first state, the second state, the third state, or the fourth state with a second communication partner device;
   a first communication control unit that, when repeatedly receiving in a first cycle a first signal continuously transmitted during a first signal section from the second communication partner device with the second communication partner device being in the fourth state, transmits the received first signal to the first communication partner device; and
   a second communication control unit that, when receiving a second signal responsive to the first signal from the first communication partner device, transmits the second signal to the second communication partner device,
   wherein when the first communication partner device transmits the second signal, the first state switching control unit causes transition from the fourth state to the first state.
(3) The communication device according to (2), wherein when the first signal is received from the second communication partner device in the fourth state and when the first communication partner device is in the first state, the second state, or the third state, the second state switching control unit causes transition to the first state.
(4) The communication device according to any one of (1) to (3), wherein the first communication control unit repeats in the first cycle an operation of continuously transmitting during the first signal section the first signal generated using pseudo-random numbers.
(5) The communication device according to (4), wherein the first communication control unit generates the first signal based on a polynomial of X²³ + X⁵ + 1.
(6) A communication device, including:
   a state switching control unit that controls switching between a first state in which synchronization is established for communication with a communication partner device, a second state in which the communication is performed after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device;
   a first communication control unit that repeatedly receives in a first cycle a first signal continuously transmitted during a first signal section from the communication partner device with the communication partner device being in the fourth state; and
   a second communication control unit that transmits to the communication partner device a second signal synchronized with the first signal received by the first communication control unit.
(7) The communication device according to any one of (1) to (6), wherein the first signal has a signal amplitude of equal to or less than a signal amplitude of the second signal.
(8) The communication device according to (7), wherein the signal amplitude of the first signal is 0.2 times or more and 0.8 times or less the signal amplitude of the second signal.
(9) The communication device according to (8), wherein the signal amplitude of the first signal is 0.4 times or more and 0.6 times or less the signal amplitude of the second signal.
(10) The communication device according to (9), wherein the signal amplitude of the first signal is 0.5 times as long as the signal amplitude of the second signal.
(11) The communication device according to any one of (1) to (10), wherein the first signal section is equal to or shorter than a second signal section during which the second signal is continuously output.
(12) The communication device according to (11), wherein the first signal section is 0.5 times as long as the second signal section.
(13) The communication device according to any one of (1) to (12), wherein the first signal section is 768 [nsec], and the first cycle is 4816 [nsec].
(14) The communication device according to any one of (1) to (12), wherein the first signal section is 1536 [nsec], and the first cycle is 3280 [nsec].
(15) The communication device according to any one of (1) to (6), wherein the first signal and the second signal have a same signal amplitude and a same cycle, and a length of the first signal section is same as a length of a second signal section during which the second signal is continuously output.
(16) The communication device according to (15), wherein the first signal section and the second signal section are each 1536 [nsec], and the first signal and the second signal each have a cycle of 3280 [nsec].
(17) The communication device according to (1) or (6), which the communication device and the communication partner device alternately transmit and receive information within a period allocated by a time division duplex (TDD) communication method.
(18) A communication system, including:
   a first communication device; and
   a second communication device, the second communication device and the first communication device alternately transmitting and receiving information within a period allocated by a time division duplex (TDD) communication method,
   wherein the second communication device includes
   a state switching control unit that controls switching between a first state in which synchronization is established for communication with the first communication device, a second state in which the communication is performed after the synchronization is established in the first state, a third state in which the communication is intermittently stopped without disestablishing the synchronization, and a fourth state in which the communication is stopped for a longer period than the third state and when the communication is resumed, synchronization is re-established with the first communication device;
   a first communication control unit that repeats in a first cycle an operation of continuously transmitting to the first communication device a first signal during a first signal section in the fourth state; and
   a second communication control unit that, when receiving a second signal output from the first communication device in response to the first signal, transmits a third signal synchronized with the second signal and causes transition from the fourth state to the first state.
(19) The communication system according to (18), including: a third communication device, the third communication device and the first communication device alternately transmitting and receiving information within a period allocated by the TDD communication method, the third communication device and the second communication device alternately transmitting and receiving information within a period allocated by the TDD communication method,
   wherein the third communication device includes
   a first communication control unit that, when repeatedly receiving in a first cycle a first signal continuously transmitted during a first signal section from the second communication device with the second communication device being in the fourth state, transmits the received first signal to the first communication device; and a second communication unit that, when receiving a second signal responsive to the first signal from the first communication device, transmits the second signal to the second communication device, and
   a second communication control unit that, when receiving a third signal synchronized with the second signal from the second communication device, transmits the third signal to the first communication device and causes transition from the fourth state to the first state. (20) The communication system according to claim 19, including: a plurality of third communication devices connected in a daisy chain between the first communication device and the second communication device,
   wherein each of the plurality of third communication devices transmits to the third communication device closer to the first communication device or the first communication device the first signal continuously transmitted during the first signal section from the second communication device in the first cycle in order, with the plurality of third communication devices and the second communication device being in the fourth state, receives a second signal synchronized with the first signal transmitted from the first communication device in order, transmits the second signal to the third communication device closer to the second communication device or the second communication device, and transitions from the fourth state to the first state.

Aspects of the present disclosure are not limited to the aforementioned individual embodiments and include various modifications that those skilled in the art can achieve, and effects of the present disclosure are also not limited to the details described above. In other words, various additions, modifications, and partial deletions can be made without departing from the conceptual ideas and spirit of the present disclosure that can be derived from the details defined in the claims and the equivalents thereof.

### [Reference Signs List]

1, 1a, 1b Communication system
10 Root device
10-2 ASE/ASD unit
10-3 DLL unit
10-4 PHY unit
20 Leaf device
20-1 Application unit
20-2 ASE/ASD unit
20-3 DLL unit
20-4 PHY unit
30 Cable
40 Branch device
40-1 Application unit
40-2 ASE/ASD unit
40-3 DLL unit
40-4, 40-5, 40-6 PHY unit
40-7 Router
80-1 State machine unit
80-10 Cable
80-2 Startup generator
80-3 Wake-up signal generator
80-4 Signal detector
80-5 Multiplexer
80- 6 Demultiplexer
80-7 Driver
80-8 Receiver
80-9 TDD controller
100, 110 Branch device

## Claims

1. A communication device, comprising:
a state switching control unit that controls switching between a first state in which synchronization is established for communication with a communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device;
a first communication control unit that repeats in a first cycle an operation of continuously transmitting to the communication partner device a first signal during a first signal section in the fourth state; and
a second communication control unit that, when receiving a second signal output from the communication partner device in response to the first signal, transmits a third signal synchronized with the second signal to the communication partner device,
wherein when the second communication control unit transmits the third signal, the state switching control unit causes transition from the fourth state to the first state.

2. A communication device, comprising:
a first state switching control unit that controls switching between a first state in which synchronization is established for communication with a first communication partner device, a second state in which the communication is started after the synchronization is established in the first state, a third state in which the communication is intermittently stopped without disestablishing the synchronization, and a fourth state in which the communication is stopped for a longer period than the third state and when the communication is resumed, synchronization is re-established with the first communication partner device;
a second state switching control unit that controls switching between the first state, the second state, the third state, or the fourth state with a second communication partner device;
a first communication control unit that, when repeatedly receiving in a first cycle a first signal continuously transmitted during a first signal section from the second communication partner device with the second communication partner device being in the fourth state, transmits the received first signal to the first communication partner device; and
a second communication control unit that, when receiving a second signal responsive to the first signal from the first communication partner device, transmits the second signal to the second communication partner device,
wherein when the first communication partner device transmits the second signal, the first state switching control unit causes transition from the fourth state to the first state.

3. The communication device according to claim 2, wherein when the first signal is received from the second communication partner device in the fourth state and when the first communication partner device is in the first state, the second state, or the third state, the second state switching control unit causes transition to the first state.

4. The communication device according to claim 1, wherein the first communication control unit repeats in the first cycle an operation of continuously transmitting during the first signal section the first signal generated using pseudo-random numbers.

5. The communication device according to claim 4, wherein the first communication control unit generates the first signal based on a polynomial of X²³ + X⁵ + 1.

6. A communication device, comprising:
a state switching control unit that controls switching between a first state in which synchronization is established for communication with a communication partner device, a second state in which the communication is performed after the synchronization is established in the first state, a third state in which the communication is intermittently stopped without disestablishing the synchronization, and a fourth state in which the communication is stopped for a longer period than the third state and when the communication is resumed, synchronization is re-established with the communication partner device;
a first communication control unit that repeatedly receives in a first cycle a first signal continuously transmitted during a first signal section from the communication partner device with the communication partner device being in the fourth state; and
a second communication control unit that transmits to the communication partner device a second signal synchronized with the first signal received by the first communication control unit.

7. The communication device according to claim 1, wherein the first signal has a signal amplitude of equal to or less than a signal amplitude of the second signal.

8. The communication device according to claim 7, wherein the signal amplitude of the first signal is 0.2 times or more and 0.8 times or less the signal amplitude of the second signal.

9. The communication device according to claim 8, wherein the signal amplitude of the first signal is 0.4 times or more and 0.6 times or less the signal amplitude of the second signal.

10. The communication device according to claim 9, wherein the signal amplitude of the first signal is 0.5 times as long as the signal amplitude of the second signal.

11. The communication device according to claim 1, wherein the first signal section is equal to or shorter than a second signal section during which the second signal is continuously output.

12. The communication device according to claim 11, wherein the first signal section is 0.5 times as long as the second signal section.

13. The communication device according to claim 1, wherein the first signal section is 768 [nsec], and the first cycle is 4816 [nsec].

14. The communication device according to claim 1, wherein the first signal section is 1536 [nsec], and the first cycle is 3280 [nsec].

15. The communication device according to claim 1, wherein the first signal and the second signal have a same signal amplitude and a same cycle, and a length of the first signal section is same as a length of a second signal section during which the second signal is continuously output.

16. The communication device according to claim 15, wherein the first signal section and the second signal section are each 1536 [nsec], and the first signal and the second signal each have a cycle of 3280 [nsec].

17. The communication device according to claim 1, which the communication device and the communication partner device alternately transmit and receive information within a period allocated by a time division duplex (TDD) communication method.

18. A communication system, comprising:
a first communication device; and
a second communication device, the second communication device and the first communication device alternately transmitting and receiving information within a period allocated by a time division duplex (TDD) communication method,
wherein the second communication device includes
a state switching control unit that controls switching between a first state in which synchronization is established for communication with the first communication device, a second state in which the communication is performed after the synchronization is established in the first state, a third state in which the communication is intermittently stopped without disestablishing the synchronization, and a fourth state in which the communication is stopped for a longer period than the third state and when the communication is resumed, synchronization is re-established with the first communication device;
a first communication control unit that repeats in a first cycle an operation of continuously transmitting to the first communication device a first signal during a first signal section in the fourth state; and
a second communication control unit that, when receiving a second signal output from the first communication device in response to the first signal, transmits a third signal synchronized with the second signal and causes transition from the fourth state to the first state.

19. The communication system according to claim 18, comprising: a third communication device, the third communication device and the first communication device alternately transmitting and receiving information within a period allocated by the TDD communication method, the third communication device and the second communication device alternately transmitting and receiving information within a period allocated by the TDD communication method,
wherein the third communication device includes
a first communication control unit that, when repeatedly receiving in a first cycle a first signal continuously transmitted during a first signal section from the second communication device with the second communication device being in the fourth state, transmits the received first signal to the first communication device; and
a second communication unit that, when receiving a second signal responsive to the first signal from the first communication device, transmits the second signal to the second communication device, and
a second communication control unit that, when receiving a third signal synchronized with the second signal from the second communication device, transmits the third signal to the first communication device and causes transition from the fourth state to the first state.

20. The communication system according to claim 19, comprising: a plurality of third communication devices connected in a daisy chain between the first communication device and the second communication device,
wherein each of the plurality of third communication devices transmits to the third communication device closer to the first communication device or the first communication device the first signal continuously transmitted during the first signal section from the second communication device in the first cycle in order, with the plurality of third communication devices and the second communication device being in the fourth state,
receives a second signal synchronized with the first signal transmitted from the first communication device in order, transmits the second signal to the third communication device closer to the second communication device or the second communication device, and transitions from the fourth state to the first state.
